(19) Europäisches Patentamt

European Patent Office

Office européen des brevets

(11) Veröffentlichungsnummer : **0 090 055**
**B1**

(12) **EUROPÄISCHE PATENTSCHRIFT**

(45) Veröffentlichungstag der Patentschrift :
21.11.85

(21) Anmeldenummer : 82102505.3

(22) Anmeldetag : 25.03.82

(51) Int. Cl.⁴ : **G 11 B   5/60, G 11 B   5/127**

(54) Magnetkopfgleiter aus Keramikmaterial.

(43) Veröffentlichungstag der Anmeldung :
05.10.83 Patentblatt 83/40

(45) Bekanntmachung des Hinweises auf die Patenterteilung : 21.11.85 Patentblatt 85/47

(84) Benannte Vertragsstaaten :
DE FR GB

(56) Entgegenhaltungen :
EP-A- 0 019 693
DE-A- 2 129 488
IBM TECHNICAL DISCLOSURE BULLETIN, Band 21,
Nr. 10, März 1979, Seiten 3921-3923, New York (USA);
S.D. CHEATHAM et al.: "Head gap wear improvement
for MR heads".

(73) Patentinhaber : IBM DEUTSCHLAND GMBH
Pascalstrasse 100
D-7000 Stuttgart 80 (DE)
DE
International Business Machines Corporation
Old Orchard Road
Armonk, N.Y. 10504 (US)
FR GB

(72) Erfinder : Ertinghausen, Friedrich
Königsberger Strasse 16
D-6501 Nieder-Olm (DE)
Erfinder : Heinrich, Volker, Dipl.-Ing.
Pommernstrasse 127
D-6200 Wiesbaden (DE)
Erfinder : Hinkel, Holger, Dr. Dipl.-Phys.
Zeisigweg 13
D-7030 Böblingen (DE)
Erfinder : Kaus, Gerhard, Dr. Dipl.-Mineraloge
Talstrasse 56
D-7031 Mötzingen (DE)
Erfinder : Kempf, Jürgen, Dr. Dipl.-Phys.
Friesenweg 9
D-7036 Schönaich (DE)
Erfinder : Nauth, Hans-Georg, Dipl.-Phys.
Pfarrer-Autsch-Strasse 12
D-6500 Mainz 21 (DE)
Erfinder : Schrader, Manfred, Dr. Dipl.-Metallurge
Bebenhäuserstrasse 24
D-7030 Böblingen (DE)

(74) Vertreter : Herzog, F. Joachim, Dipl.-Ing
Schönaicher Strasse 220
D-7030 Böblingen (DE)

**Beschreibung**

Die Erfindung betrifft einen Magnetkopfgleiter, insbesondere für über einem Luftpolster fliegende Magnetköpfe, bestehend aus einem Keramikmaterial aus Aluminiumoxid und Titancarbid, vorzugsweise ca. 70 % Al$_2$O$_3$ und 30 % TiC.

Aus der europäischen Patentanmeldung 00 19693, die der US Patentschrift 4 251 841 entspricht, ist ein Magnetkopfgleiter gemäß dem Oberbegriff des Patentanspruchs 1 bekannt. Dieses Material läßt sich recht gut bearbeiten, ist bruchfest, hat gute Abriebeigenschaften, eine lange Lebensdauer und ist elektrisch leitend.

Bei immer höherer Datendichte pro Flächeneinheit der magnetischen Speicherplatte ist es nötig, den Abstand zwischen Magnetkopf und Plattenoberfläche zu verringern. Damit wird das Luftpolster zwischen dem den Magnetkopf tragenden Gleiter und der Plattenoberfläche geringer. Die Häufigkeit und die Wahrscheinlichkeit mit der der Gleiter bei seiner Relativbewegung zum Aufzeichnungsträger auf diesen aufschlägt wird dadurch größer. Zur Vermeidung von Zusammenstößen zwischen Kopf und Platte, die für beide Teile schädlich sind, oder zumindest zur Verminderung der dabei auftretenden Beschädigungen sowie zur Verbesserung der Verhältnisse beim Anfahren und Anhalten, ist es bekannt, die Platte mit einem Schmiermittel zu versehen. In der Praxis hat es sich dabei gezeigt, daß ein zu dünner Schmierfilm die Beschädigung der Platte bei Kopfberührung nicht zuverlässig vermeiden kann, daß aber andererseits ein zu dicker Schmierfilm dazu führt, daß der Magnetkopfgleiter bei Beginn der Relativbewegung zwischen der Platte und dem Kopf, d. h. beim Anfahren, auf der Platte klebt. Beim Anfahren kann daher der Gleiter von seinem Tragarm abgerissen werden oder der Tragarm kann verbogen werden, falls es nicht noch zu weiteren Beschädigungen kommt. Die Aufbringung und Einhaltung eines Schmierfilms in genau richtiger Stärke ist eine unwahrscheinlich schwierige und in der Praxis selten reproduzierbare Aufgabe. Andererseits haben die Untersuchungen auch Hinweise dafür geliefert, daß die Oberfläche des Magnetkopfgleiters, welche der Plattenoberfläche des Magnetkopfgleiters, welche der Plattenoberfläche gegenübersteht, einen nicht unerheblichen Einfluß auf das Verhalten hinsichtlich der Berührung zwischen Kopf und Platte hat.

Hier will die Erfindung Abhilfe schaffen. Die Erfindung, wie sie im Anspruch 1 gekennzeichnet ist, löst die Aufgabe, einen Magnetkopfgleiter gemäß dem Oberbegriff des Anspruchs 1 so zu modifizieren, daß sein Flugverhalten und sein Gleitverhalten bei Start- und Stopvorgängen wesentlich besser ist, d. h. daß wesentlich weniger Zusammenstöße zwischen Kopf und Platte stattfinden und dadurch die Lebenszeit von Magnetkopfgleitern mit Kopf einerseits und Magnetplatte andererseits wesentlich verlängert ist.

Die durch die Erfindung erreichten Vorteile sind im wesentlichen darin zu sehen, daß die Lebensdauer von Magnetkopfgleitern, bei denen durch Entfernen der TiC-Komponente in einer dünnen oberflächennahen Schicht auf der Gleitseite des Gleiters, der aus Aluminiumoxid und Titancarbid besteht, um ein Vielfaches gesteigert ist. Die gesteigerte Lebensdauer drückt sich darin aus, daß ein Vielfaches an Start/Stop-Vorgängen, d. h. Anfahren und Anhalten der Platte, gegenüber vorher durchgeführt werden kann, ohne daß in der Zwischenzeit eine katastrophal beschädigende Berührung zwischen Kopf und Platte auftritt. Dadurch ist die Lebensdauer sowohl des Magnetkopfgleiters als auch der mit ihm zusammenarbeitenden Platte um ein Vielfaches gesteigert. Dies hat auch positive Wirkungen auf die Verminderung der Ausfallquoten von Magnetplattensystemen.

Gemäß einer vorteilhaften Ausführungsform wird die Titan-carbid-Komponente durch präferentielles Ätzen mit einem reaktiven Ionenätzverfahren aus der Gleitoberfläche des Gleiters herausgelöst. Dieses Ätzverfahren beeinträchtigt den angebauten Magnetkopf nicht, da der Materialabtrag am metallischen Magnetkopf nur einige wenige nm beträgt.

Im folgenden wird die Erfindung anhand von lediglich einem Ausführungsweg darstellenden Zeichnungen näher erläutert.

Es zeigt :

Figur 1 in perspektivischer Darstellung einen Magnetkopfgleiter mit angebautem Magnetkopf, der auf der Gleitseite drei schienenförmige Gleitflächen aufweist und aus der Mischkeramik von Al$_2$O$_3$ und TiC besteht ;

Figur 2 in vergrößertem Maßstab eine Draufsicht auf einen Ausschnitt der Gleitfläche und

Figur 3 eine Seitenansicht entlang der Linie 3-3 von Fig. 2, die in vergrößerter Ansicht die Schichtung und die Materialkomponenten erkennen läßt.

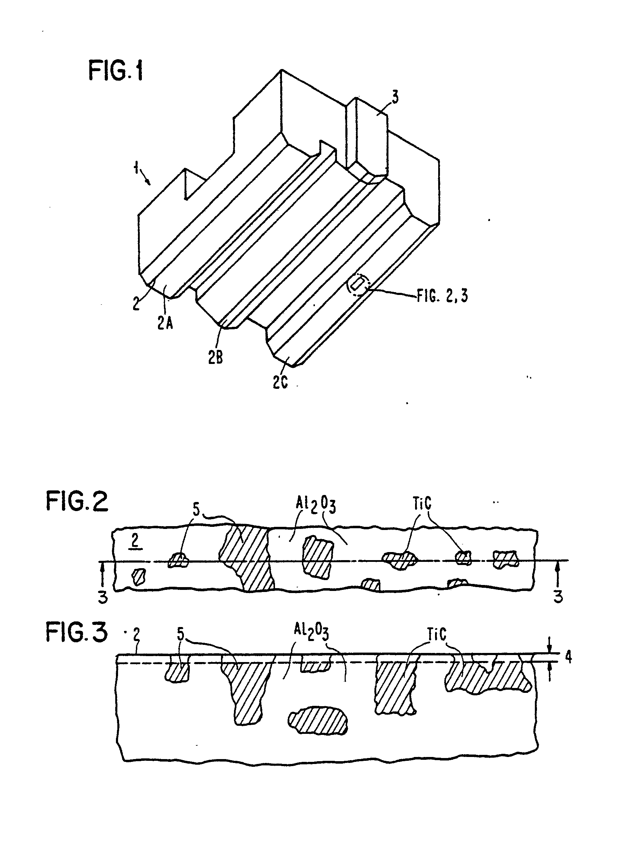

Der in Fig. 1 dargestellte Magnetkopfgleiter 1 enthält auf seiner Gleitseite 2 längliche Schienen 2A, 2B und 2C. Auf den beiden äußeren Schienen 2A und 2C baut sich bei Fliegen über eine nicht dargestellte Magnetplatte das Luftkissen auf, welches den ganzen Magnetkopfgleiter 1 mit dem angebauten Magnetkopf 3 trägt. Der Magnetkopf 3 ist am Ende der mittleren Schiene 2B vorgesehen. Dieser Kopf kann einen Dünnfilm-Übertrager enthalten. Es ist auch eine andere Konstruktion der Gestalt möglich, daß Dünnfilmköpfe jeweils am Ende der beiden äußeren Längsschienen 2A und 2C angeordnet sind. Auch sind andere Gestaltungen der Gleitfläche 2 möglich.

Der in Fig. 1 dargestellte Magnetkopfgleiter ist aus Keramikmaterial hergestellt, welches aus einer Mischung von Aluminiumoxid und Titancarbid besteht, wobei vorzugsweise ca. 70 % Al$_2$O$_3$ und 30 % TiC vorgesehen sind.

In Fig. 2 ist in einem Ausschnitt der Gleitschiene 2C in Draufsicht die erfindungsgemäß gestaltete Gleitfläche 2 vergrößert dargestellt, und in Fig. 3 in einem Schnittbild die erfindungsgemäß gestaltete Gleitfläche 2 in Seitenansicht entlang der Schnittlinie 3-3 aus Fig. 2. Der überwiegende Teil des Materials besteht aus dem Bestandteil $Al_2O_3$, in den Titancarbidpartikel eingelagert sind. In einer oberflächennahen Schicht 4, deren Dicke zwischen 10 und 100 nm liegt, vorzugsweise zwischen 20 und 50 nm, ist erfindungsgemäß in den mit 5 bezeichneten Bereichen die Titancarbid-Komponente entfernt bzw. herausgelöst. Die Ebene der Oberfläche ist weiterhin durch die mit 2 bezeichnete Linie gegeben, die jedoch in den Bereichen 5 entsprechend der Dicke der Schicht 4 Ausnehmungen bzw. Gruben aufweist. Somit wird die Oberflächenebene 2, allein durch die Komponente $Al_2O_3$ bestimmt. Im Bereich der Oberfläche der Gleitseite 2 hat somit die Titancarbid-Komponente keinen Einfluß mehr, unabhängig davon ob, wie in Fig. 2 erkennbar, die unter der Schicht 4 liegenden Teile der einzelnen Titancarbidpartikel zur Oberfläche hin offen in Erscheinung treten.

Untersuchungen haben gezeigt, daß Magnetkopfgleiter mit einer erfindungsgemäß gestalteten Oberfläche eine um ein Vielfaches besseres Start/Stop-Verhalten zeigen als gleichartig gestaltete, aus demselben Material bestehende Magnetkopfgleiter, deren Oberfläche der Gleitseite nicht gemäß der Erfindung modifiziert ist. Es ist noch nicht gänzlich geklärt, worauf diese wesentliche Verbesserung der Flugeigenschaften bzw. der Reibeigenschaften des erfindungsgemäß gestalteten Magnetkopfgleiters zurückzuführen ist. Man könnte einmal davon ausgehen, daß die durch das Herauslösen der TiC-Komponente aus der oberflächennahen Schicht 4 entstandenen Gruben bzw. Vertiefungen dazu geeignet sind Schmiermittel aufzunehmen, und dadurch die Schmierung zwischen Gleitern und Platte verbessert ist. Gegen diese Erklärung spricht jedoch die Tatsache, daß bei Herauslösen von $Al_2O_3$ aus der Oberfläche unter Belassung von TiC bei gleich großer Anzahl von Vertiefungen und damit gleich großem Schmiermittelreservoir, die Flugeigenschaften gegenüber einem nicht modifizierten Gleiter nicht verbessert sind. Dies wurde durch Vergleichsversuche herausgefunden.

Für die Verbesserung des Flugverhaltens des erfindungsgemäß gestalteten Magnetkopfgleiters ist demnach wohl die spezielle Entfernung einer Materialkomponente, nämlich der Titancarbid-Komponente, verantwortlich. Die Gleitoberfläche 2 des Magnetkopfgleiters stellt eine reine $Al_2O_3$-Gleitfläche dar. Die zu den Versuchszwecken benutzte Magnetplatte enthält magnetische Partikel in einer Kunstharzschicht. Es ist aus der Gelenkprotetik, insbesondere der Hüftgelenksprotetik beim Menschen, bekannt, daß Aluminiumoxidkeramik extrem gute tribologische Eigenschaften in Zusammenarbeit mit Kunststoff aufweist. Darüberhinaus ist nicht auszuschließen, daß der Verlauf des elektrischen Feldes zwischen der Plattenoberfläche und der Gleitoberfläche des Magnetkopfgleiters positiv beeinflußt ist und zur Verringerung der Ansammlung von Abrieb, dem sogenannten Debris, am Magnetkopfgleiter beiträgt. Ein elektrisches Feld kommt im übrigen auch bei dem hier vorliegenden elektrisch leitfähigen Magnetkopfgleiter vor aufgrund von influenzierter Ladung.

Die Herauslösung der Titancarbid-Komponente in der oberflächennahen Schicht 4 kann gemäß einem vorteilhaft zu verwendenden Verfahren durch einen reaktiven Ionenätzprozeß mittels präferentiellem Ätzen erfolgen. Eine Abdeckung des Magnetkopfes 3 ist auch bei längeren Ätzzeiten als nötig nicht erforderlich, da dieser Ätzprozeß keinen negativen Einfluß auf das Schreib-/Leseelement 3 hat. Das Ätzen erfolgt vorteilhafterweise in einem $CF_4$-Plasma.

Die beim reaktiven Ionenätzprozeß in einem Parallel-Plattenreaktor verwendeten Prozeßbedingungen sind bei einer vorteilhaften Konfiguration folgende:

| | |
|---|---|
| Plasma | $CF_4$ |
| Flußmenge | · 18 ml/min |
| Druck | $8 \times 10^{-3}$ mbar |
| Leistung | 1 500 Watt |
| Kathodenmaterial | Ti |
| Ätzrate | > 1 nm/sec |
| Ätzzeit | 30 sec |

Bei einer Ätzzeit von 30 sec und einer Ätzrate von etwas mehr als 1 nm/sec ergibt sich eine Dicke der Schicht 4, die größer als 20 nm ist. Versuche mit einem derartig gestalteten Magnetkopfgleiter ergaben die vierfache Anzahl von möglichen Start/Stop-Vorgängen als bei nicht konditionierten Magnetkopfgleitern des gleichen Materials und der gleichen Form und unter sonst gleichen Bedingungen.

Bei dem angewendeten Ätzverfahren werden möglicherweise auch scharfe Kanten auf der Gleitseite 2 des Magnetkopfgleiters gebrochen, wodurch Ansammlungen von Debris an diesen Kanten aufgrund influenzierter Ladungen vermindert, wenn nicht gar vermieden werden.

Der erfindungsgemäß gestaltete Magnetkopfgleiter erhöht die Lebensdauer von Magnetplatten und Köpfen um ein Vielfaches gegenüber demselben Magnetkopfgleiter mit nicht behandelter Gleitoberfläche.

**Patentansprüche**

1. Magnetkopfgleiter, insbesondere für über einem Luftpolster fliegende Magnetköpfe (3), bestehend aus einem Keramikmaterial aus Aluminiumoxid und Titancarbid, vorzugsweise aus ca. 70 % $Al_2O_3$ und 30 % TiC, dadurch gekennzeichnet, daß auf der Gleitseite (2) des Gleiters (1) die Titancarbid-Komponente (5) in einer oberflächennahen dünnen Schicht (4) entfernt ist.

2. Magnetkopfgleiter nach Anspruch 1, dadurch gekennzeichnet, daß die dünne Schicht (4), in der die Titancarbid-Komponente entfernt ist, zwischen 10 und 100 nm, vorzugsweise 20 nm bis 50 nm, dick ist.

3. Magnetkopfgleiter nach Anspruch 1 oder 2, dadurch gekennzeichnet, daß die Entfernung der Titancarbid-Komponente durch präferentielles Ätzen mit einem reaktiven Ionenätzprozeß durchgeführt ist.

4. Magnetkopfgleiter nach Anspruch 3, dadurch gekennzeichnet, daß der Ionenätzprozeß in einem CF$_4$-Plasma erfolgt.

## Claims

1. Magnetic head slider, particularly for magnetic heads (3) flying over an air cushion, consisting of a ceramic material made of aluminum oxide and titanium carbide, preferably made of about 70 % Al$_2$O$_3$ and 30 % TiC, characterized in that on the sliding side (2) of the slider (1) the titanium carbide component (5) is removed in a thin layer (4) directly beneath the surface.

2. Magnetic head slider as claimed in claim 1, characterized in that the thin layer (4) where the titanium carbide component has been removed is between 10 and 100 nm, preferably 20 nm to 50 nm thick.

3. Magnetic head slider as claimed in claim 1 or 2, characterized in that the titanium carbide component is removed by preferential etching in a reactive ion etching process.

4. Magnetic head slider as claimed in claim 3, characterized in that the ion etching process is effected in a CF$_4$ plasma.

## Revendications

1. Patin pour tête magnétique, notamment pour des têtes magnétiques (3) flottant sur un coussin d'air, se composant d'un matériau céramique constitué d'oxyde d'aluminium et de carbure de titane, de préférence d'environ 70 % d'Al$_2$O$_3$ et 30 % de TiC, caractérisé en ce que sur la surface de glissement (2) du patin (1) le composant carbure de titane (5) est enlevé sur une couche mince (4) proche de la surface.

2. Patin pour tête magnétique selon la revendication 1, caractérisé en ce que la couche mince (4), où le composant carbure de titane est enlevé, a une épaisseur comprise entre 10 et 100 nm, de préférence entre 20 nm et 50 nm.

3. Patin pour tête magnétique selon la revendication 1 ou 2, caractérisé en ce que l'enlèvement du composant carbure de titane est effectué préférentiellement par gravure au moyen d'un processus de gravure par ions réactifs.

4. Patin pour tête magnétique selon la revendication 3, caractérisé en ce que le processus de gravure par ions est mis en œuvre dans un plasma de CF$_4$.

FIG.1

FIG.2

FIG.3

1